# EUROPEAN PATENT SPECIFICATION

(11) **EP 3 963 118 B1**
(45) Date of publication and mention of the grant of the patent: **20.03.2024**
(21) Application number: 20740473.2
(22) Date of filing: 26.06.2020
(51) Int. Cl.: C22B 7/00, C22B 7/04, C22B 21/00

(54) **OXIDATIVE ROASTING OF BLACK DROSS AND SALT CAKE**
OXIDATIVE RÖSTUNG VON SCHWARZER KRÄTZE UND SALZSCHLACKE
GRILLAGE PAR OXYDATION D'ÉCUME NOIRE ET DE GÂTEAU DE SEL

(30) Priority: 27.06.2019 US 201962867721 P
(43) Date of publication of application: 09.03.2022
(73) Proprietor: Novelis, Inc., Atlanta, GA 30326 (US)
(72) Inventor: DOUTRE, Don Allen, Kennesaw, Georgia 30144 (US); HAY, Gary Richard, Kennesaw, Georgia 30144 (US)
(74) Representative: Weickmann & Weickmann PartmbB
(86) International application number: PCT/US2020/039803
(87) International publication number: WO 2020/264281

(56) References cited:
- US-A- 4 523 949
- US-A- 5 783 142
- REZA BEHESHTI ET AL: "Black Dross: Processing Salt Removal from Black Dross by Thermal Treatment", JOM: JOURNAL OF METALS, vol. 66, no. 11, 16 October 2014 (2014-10-16), pages 2243-2252, XP055728408, United States ISSN: 1047-4838, DOI: 10.1007/s11837-014-1178-6
- TSAKIRIDIS P E ED - SHARMA VIRENDER K ET AL: "Aluminium salt slag characterization and utilization A review", JOURNAL OF HAZARDOUS MATERIALS, ELSEVIER, AMSTERDAM, NL, vol. 217, 16 March 2012 (2012-03-16), pages 1-10, XP028412593, ISSN: 0304-3894, DOI: 10.1016/J.JHAZMAT.2012.03.052 [retrieved on 2012-03-27]
- BEATRICE CASTELLANI ET AL: "Comparative Analysis of Monitoring Devices for Particulate Content in Exhaust Gases", SUSTAINABILITY, vol. 6, no. 7, 11 July 2014 (2014-07-11), pages 4287-4307, XP055728843, DOI: 10.3390/su6074287
- Coker Eric N.: "The oxidation of aluminum at high temperature studied by Thermogravimetric Analysis and Differential Scanning Calorimetry", Sandia Report SAND2013-8424, 31 October 2013 (2013-10-31), pages 1-24, XP093087476, Retrieved from the Internet: URL:https://digital.library.unt.edu/ark:/6 7531/metadc833953/m2/1/high_res_d/1096501. pdf [retrieved on 2023-09-29]

## Description

### CROSS-REFERENCE TO RELATED APPLICATION

This application claims the benefit of and priority to U.S. Provisional Application No. 62/867,721, filed on June 27, 2019, and titled "OXIDATIVE ROASTING OF BLACK DROSS AND SALT CAKE".

### TECHNICAL FIELD

The present disclosure relates to metal recycling generally and more specifically to treatment and use of dross from aluminum recycling.

### BACKGROUND

Byproducts of metal recycling, and specifically aluminum recycling, can be difficult to handle and process. For example, aluminum recycling generally produces black dross or white dross as a byproduct of the recycling process. Black dross generally contains some aluminum, a moderate amount of aluminum oxides, and a substantial portion of salts. For example, some black dross resulting from the recycling of used beverage can (UBC) stock produces black dross having about 10% aluminum, 50% salts, and 40% oxides, although other amounts may occur. White dross is a mixture of oxides and metallic aluminum and normally contains very little salt. The metal in white dross is most often recovered by treating the dross with salts at high temperatures. This results in an oxide/salt byproduct commonly referred to as salt cake. These byproducts can contain nitrides, carbides, and other materials.

The byproducts can be hazardous and can require highly-controlled transportation and disposal operations. For example, dross from aluminum recycling can generate explosive hydrogen when wet, and thus must be carefully handled. Current dross treatment technologies generally require separate facilities, and thus the dross must be transported from the location of its generation to a treatment facility. In some countries, regulations prohibit various handling and disposal of such materials. Current technologies that treat dross focus on recovery of the metal (e.g., aluminum) through heating and melting, and recovery of the salt through leaching and evaporation. These current technologies rely on high power output, such as heating of batches of white dross to remove metal and using large amounts of water and energy to leach salt from dross or salt cake and evaporating that water to recover the salt. The water and energy used to leach salt from dross is significant enough that certain current white dross treatment techniques specifically focus on a salt-free process to avoid having to recover salt at a later step. Additionally, leaching salt from dross can generate substantial noxious, toxic, and/or reactive gases (e.g., H₂S, PH₃, NH₃, H₂/CH₄), which require controlled collection and destruction.

US 4,523,949 describes an aluminum dross reclamation, whereby aluminum dross containing chlorides and combustible volatile material is agglomerated and sized to produce a compact which is then treated in a direct fired rotary kiln at or above 1800° F (982°C).

R. Beheshti et al., Journal of Metals, vol. 66, no. 11, 2014, pp. 2243-2252 describes salt removal from black dross by thermal treatment in an inert atmosphere.

US 5,783,142 describes a kiln system for a process for treatment of aluminum dross residue having aluminum nitride, free aluminum and/or aluminum chlorides having a particle size within the range of 0.3 to 300 microns, i.e. fines, to produce a high alumina lightweight aggregate.

P.E. Tsakiridis, Journal of Hazardous Materials 217-218 (2012), 1-10, is a review about aluminum salt slag characterization and utilization.

B. Castellani et al., Sustainability 2014, 6, 4287-4307, is a review about comparative analysis of monitoring devices for particulate content in exhaust gases.

Thus, there is a desire for improved handling and treatment of dross from aluminum recycling such that components of the dross can be more easily and efficiently recovered and such that the dross can be more easily and efficiently handled.

### SUMMARY

The term embodiment and like terms are intended to refer broadly to all of the subject matter of this disclosure and the claims below. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

In the present application, a method of extracting salt from metal recycling byproduct is provided. The method includes charging a vessel with dross. The dross includes aluminum oxides and salt. The method further includes heating the dross to a temperature at or above 1200°C to evaporate the salt. The method includes maintaining the dross at the temperature to permit evaporation of the salt as salt vapor. Maintaining the dross at the temperature further comprises maintaining the dross at the temperature in an oxidizing environment. The method further includes directing the salt vapor out of the vessel through a gas outlet, collecting and condensing the salt vapor into a salt, and collecting and reusing the salt for further treatment of dross.

In the present application, a system for extracting salt from metal recycling byproducts is provided. The system includes a vessel for receiving dross. The dross includes aluminum oxides and salt. The system further includes a heat source coupled to the vessel for heating the dross to a temperature sufficiently high to evaporate the salt as salt vapor (i.e., 1200 °C or above). The system further includes a gas outlet coupled to the vessel for conveying gas and salt vapor from the vessel. The system further includes a salt collector coupled to the gas outlet for collecting and condensing the salt vapor, wherein the salt collector is coupled to a salt source to replenish the salt source through the extraction of salt from the dross within the reaction vessel, and wherein the salt source provides salt to the reaction vessel.

While various implementations described in the present disclosure can include additional systems, methods, features, and advantages, which cannot necessarily be expressly disclosed herein but will be apparent to one of ordinary skill in the art upon examination of the following detailed description and accompanying drawings, the invention is solely defined by independent claim 1 and independent claim 7. Further embodiments are defined in the dependent claims 2 to 6 and 8 to 15.

### BRIEF DESCRIPTION OF THE DRAWINGS

The specification makes reference to the following appended figures, in which use of like reference numerals in different figures is intended to illustrate like or analogous components.
FIG. 1 is a schematic diagram of a dross thermal processing system according to certain aspects of the present disclosure.
FIG. 2 is a schematic diagram of dross pelletizing system according to certain aspects of the present disclosure.
FIG. 3 is a schematic diagram of a dross pellet being heated according to certain aspects of the present disclosure.
FIG. 4 is a flowchart depicting a process for generating dross pellets according to certain aspects of the present disclosure.
FIG. 5 is a flowchart depicting a process for processing dross pellets according to certain aspects of the present disclosure.
FIG. 6 is a schematic diagram depicting a system for extracting salt from dross according to certain aspects of the present disclosure.
FIG. 6A is a schematic diagram depicting another system for extracting salt from dross according to certain aspects of the present disclosure.
FIG. 7 is a flowchart depicting a process for extracting salt from dross according to certain aspects of the present disclosure.
FIG. 8 is a schematic diagram depicting a two-stage process for thermally treating dross according to certain aspects of the present disclosure.
FIG. 9 is a schematic diagram depicting a single-vessel, two-stage process for thermally treating dross according to certain aspects of the present disclosure.

### DETAILED DESCRIPTION

The present invention relates to a system for extracting salt from metal recycling byproducts as defined in the claims. Further, the present invention relates to a method of extracting salt from metal recycling byproduct using the inventive system as defined in the claims. Certain aspects and features of the present disclosure relate to techniques for extracting and capturing salt during dross treatment. During dross treatment, temperatures can be permitted to exceed the boiling point of one or more salt components of the dross in an oxidizing environment. The temperature is held sufficiently high such that the salt content can exert an appreciable vapor pressure and can be held for a sufficient time to permit most, all, or substantially all of the salt content to evaporate, leaving behind the nonvolatile components of the dross. The evaporated salt is condensed and collected.

Metal recycling, such as aluminum recycling, can result in secondary metal (e.g., secondary aluminum) and various recycling byproducts. For example, in aluminum recycling processes, the recycling byproducts can be types of dross, or mixtures of metallic aluminum and aluminum oxides. In some cases, other materials in the aluminum being recycled can include contaminants and salts, which can end up in the dross. Different types of dross can exist, such as white dross and black dross. White dross consists primarily of aluminum and aluminum oxides, whereas black dross additionally contains salts. The terms white and black when used with respect to dross refers to a type of dross, and not necessarily the physical color of the dross. In some cases, processing white dross can include combining the white dross with salts to facilitate extraction of secondary metal.

Black dross is a common byproduct of recycling used beverage can (UBC) stock, in which approximately 2% of salt by weight is used to remove impurities and oxides from the aluminum in the UBC stock. The recycling processes for UBC stock result in black dross balls or chunks having various sizes on the order of tens of millimeters (e.g., 25 mm) in diameter. These black dross balls generally contain approximately 10% aluminum, 50% salt, and 40% oxides and additional contaminants by weight.

White dross is a common byproduct of many other types of aluminum recycling processes. White dross can contain a substantial amount of aluminum that can be removed through further processing by contacting the white dross with salt to generate salt cake. As used herein, the general term dross is inclusive of salt cake generated from combining white dross with salt.

It has been found, such as from recycling UBC, that black dross in its native form can retain carbon up to approximately 4% by weight even after thermal treatment. Generally, thermal treatment of native black dross can form a layered ball wherein the outermost layers are covered with complex oxides and the innermost layers contain non-oxidized carbon and other compounds. It was determined that a larger surface-to-volume ratio can be desirable to ensure more of the residual carbon in the black dross is reacted with oxygen.

Crushing black dross prior to thermal treatment may be potentially problematic, at least in part because the black dross fines are difficult to handle and can become entrained in gas being output from the reaction vessel (e.g., rotary kiln). In cases where salt vapor is collected from the reaction vessel, such as described herein, black dross fines may become entrained in the output gas which can contaminate the salt vapor.

To avoid the problem with black dross fines, disintegrated black dross (e.g., disintegrated through crushing or any other suitable technique) can be agglomerated into pellets. In some cases, the pellets can have a form that is tailored to achieve desirable thermal processing. For example, the pellets can have channels throughout, through which oxygen can pass and out of which salt vapor can escape. In some cases, a channel can pass through the pellet, although that need not always be the case. In some cases, a channel can be single-ended and can extend from a surface of the pellet partially into the pellet. Pellets can be formed through pelletization, compaction, or any other agglomeration technique. In some cases, pellets can be formed using techniques that create inherent channels. In some cases, black dross fines can be mixed with additives prior to agglomeration such that the additives form channel precursors in the pellets. Upon oxidation, the additives can decompose, leaving voids that form or expose the channels in the pellets. The additives can be selected to oxidize, volatize, or otherwise decompose at sufficiently low temperatures such that the channels are exposed by the time thermal processing temperatures are reached for processing of the black dross. For example, additives can be selected that oxidize at temperatures at or below approximately 500 °C, 600 °C, 700 °C, or 800 °C, or between approximately 500 °C and 800 °C. The temperature at which the additive oxidizes, volatizes, or otherwise decomposes and exposes the channels can be referred to as a channel exposure temperature. The pellets thus comprise channels when heated to temperatures at or above the channel exposure temperature. For example, a pellet can comprise channels when heated to temperatures at or above 800 °C for additives that oxidize at temperatures at or below 800 °C, including additives that oxidize at temperatures at or below 500°C.

In some cases, the disintegrated black dross can form fines having diameters at or less than approximately 10 mm, 9 mm, 8 mm, 7 mm, 6 mm, 5 mm, 4 mm, 3 mm, or 2 mm at an upper range end and diameters at or above approximately 50 micrometers, 40 micrometers, 30 micrometers, 20 micrometers, 10 micrometers, or 5 micrometers at a lower range end. In some cases, an eddy current separator can be used to remove excess metallic aluminum from the black dross fines. In some cases, the black dross fines can be screened to remove oversized particles, which can be diverted back for further disintegration or can be fed forward for thermal processing.

In some cases, the agglomeration process can result in black dross pellets having consistent sizes, such as pellets having diameters (e.g., a maximum diameter of a pellet or an average diameter of a pellet) between 5 mm and 50 mm, between 10 mm and 50 mm, between 10 and 40 mm, between 10 and 30 mm, between 10 and 20 mm, between 12 mm and 18 mm, or 14 mm and 16 mm. In some cases, the variation between pellets can be at or less than approximately 10 mm, 9 mm, 8 mm, 7 mm, 6 mm, 5 mm, 4 mm, 3 mm, 2 mm, or 1 mm. The consistent size of the pellets can facilitate successful estimation of processing times for thermal processing.

In some cases, additives can include waste materials from other industries. For example, additives can include one or more of automobile shredder fluff, post-consumer scrap (e.g., shredded plastic bottles or agricultural byproducts such as corn silk, wheat chaff, straw, or rice hulls), textile residues, carpet residues, UBC decoater dust, or other such products. In some cases, additives can be selected to provide a certain degree of permeability to a pellet at elevated temperature (e.g., at or above 500 °C). In some cases, additives can additionally include fuel additives selected to provide fuel to help generate heat within the reaction vessel. In some cases, an additive can be selected to provide fuel and also improve the permeability of a pellet at elevated temperature.

In some cases, the agglomerated pellets can be generally spheroid in shape, although that need not be the case and other regular or irregular shapes may be utilized. In some cases, pellets can have a smooth surface or a rough surface. In some cases, pellets can be further pre-processed to alter the physical shape of the pellet to facilitate permeability of the pellet to gasses.

In some cases, black dross pellets tailored as described herein can improve the efficiency and speed of salt extraction. In some cases, black dross pellets tailored as described herein can improve the oxidation of residual carbon, residual metallic aluminum, and/or other residual compounds. In some cases, the black dross pellets can be used in conjunction with a reaction vessel designed to maintain an oxidative environment.

According to the invention, salt is extracted from dross containing salt through thermal processing. Traditionally, thermal processing of dross is carried out at temperatures well below 1200 °C. However, by heating the reaction vessel to reach temperatures at or above 1200 °C, the salt is evaporated as salt vapor and is directed out of the reaction chamber through a gas outlet. In some cases, the reaction vessel is permitted or encouraged to reach a temperature at or above the boiling points of salts within the dross (e.g., 1416 °C for KCl or 1450 °C for NaCl) to increase the rate at which the salt is evaporated as salt vapor and directed out of the reaction chamber. In some cases, the gas outlet can also function as a material inlet. While a reaction vessel may be capable of supporting temperatures in the range of up to 1200 °C to 1600 °C, these temperature ranges were previously not generally used in the aluminum industry. Dross can be maintained at these high temperatures until approximately 95%, 99%, 99.9%, or other relevant amount of the salt in the dross has evaporated. In some cases, dross can be maintained at these high temperatures for approximately 30 minutes, 35 minutes, 40 minutes, 45 minutes, 50 minutes, 55 minutes, 60 minutes, 65 minutes, 70 minutes, 75 minutes, 80 minutes, 85 minutes, 90 minutes, 95 minutes, 100 minutes, 105 minutes, 110 minutes, 115 minutes, 120 minutes, 125 minutes, 130 minutes, 135 minutes, 140 minutes, 145 minutes, or 150 minutes. In some cases, such as for small and permeable dross, the dross can be maintained at these high temperatures for approximately 10 minutes, 15 minutes, 20 minutes, 25 minutes, or 30 minutes. In some cases, the use of pelletized dross can facilitate oxidation of residual compounds in the dross, which can facilitate reaching and/or maintaining these high temperatures with only the addition of oxygen to the reaction vessel (e.g., without supplying heat to the reaction vessel through a separate heat source, such as an oxy-fuel burner).

Salt vapor exiting the reaction vessel is collected and condensed into salt, which is collected and reused for further treatment of dross (e.g., white dross) or UBC (e.g., in a sidewell furnace).

In some cases, maintaining these high temperatures necessary to extract salt from dross via an evaporative route results in an unexpected formation of a continuous, dense layer of oxide adhering to the refractory inner surface of the reaction vessel. Although this oxide layer can be removed periodically (e.g., to avoid losing reactor volume), its presence can provide a degree of protection to the underlying refractory from abrasive wear, thermal shock, and chemical attack, thus extending the life of the reaction vessel. Surprisingly, maintaining these high temperatures necessary to extract salt from dross via an evaporative route results in the removal of aluminum nitrides, and thus enables more efficient recycling of certain drosses or dross treatment processes that have relatively high amounts of aluminum nitride.

In some cases, a two-stage dross treatment process can be performed. In a first stage, white dross is contacted with salt at a first temperature to recover metal, with salt cake generated as a byproduct. In a second stage, the salt cake can be thermally processed at a second temperature (e.g., at a temperature sufficiently high to evaporate the salt, in some cases, at a temperature at or above the boiling point of the salt) to evaporate the salt as salt vapor for collection and condensation into salt. In some cases, the salt vapor and/or salt can be temporarily stored and reused in the subsequent treatment of additional white dross. In some cases, increased amounts of salt can be obtained by mixing existing black dross in with the white dross and/or the salt cake prior to the second stage. In some cases, the second stage can include oxidizing residual compounds in the dross, such as remaining metal.

In some cases, each stage of the two-stage dross treatment process can occur in the same vessel, although that need not always be the case. When a single vessel is used, residual heat remaining after removal of the inert oxides after the second stage can be used to begin heating new white dross in a subsequent treatment process. Thus, the two-stage dross treatment process can involve the reuse of salt and thermal energy between a second stage of a treatment process and a first stage of a subsequent treatment process.

In some cases, the two-stage dross treatment process can facilitate the recycling of low grade scrap (e.g., thermal break material). In such cases, the white dross provided to the reaction vessel comes from the melting of the scrap within the reaction vessel. In such cases, the scrap can be melted, secondary aluminum can be tapped off, salt can be added to produce salt cake, additional secondary aluminum can be tapped off, and the heat and oxygen can be increased to evaporate the salt and generate the inert oxide residue.

In some cases, additional organic-rich material can be added to provide some of the energy required to achieve the high temperatures in the second stage of the two-stage dross treatment process.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

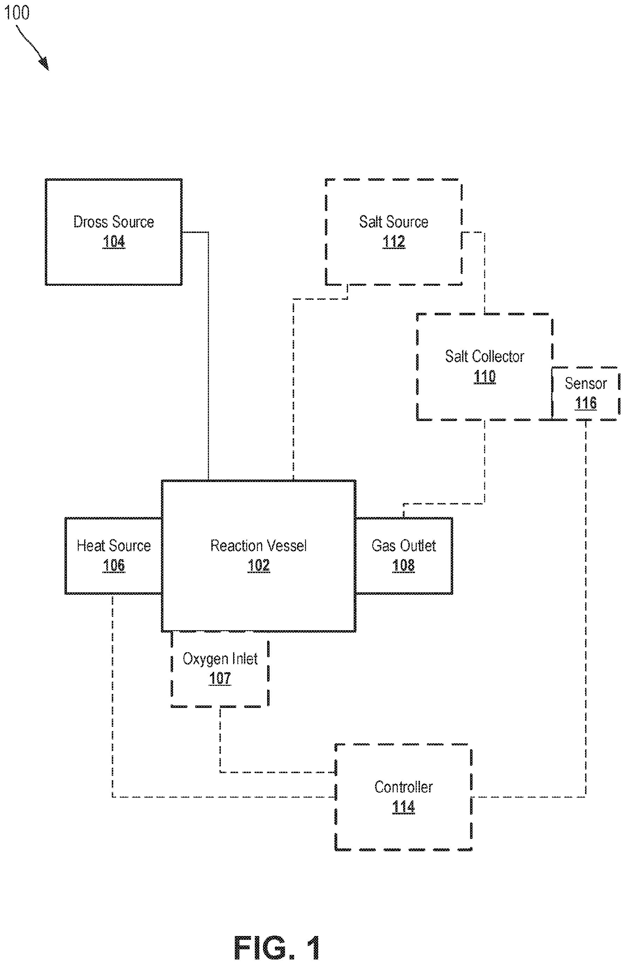

FIG. 1 is a schematic diagram of a dross thermal processing system 100 according to certain aspects of the present disclosure. The system 100 comprises a reaction vessel 102 in which the thermal processing of the dross can occur. The reaction vessel 102 can be a rotary kiln, although any other suitable reaction vessel can be used. A source of dross 104 can be used to supply the reaction vessel 102 with dross (e.g., white dross, black dross, or salt cake). The reaction vessel 102 is supplied with initial heat from a heat source 106, such as an oxy-fuel burner. When thermal processing is underway, heat can be increased and/or maintained within the reaction vessel 102 through the addition of oxygen, such as through an oxygen inlet 107 or the heat source 106 (e.g., when the heat source 106 is used in a non-heating form to provide oxygen to the reaction vessel 102).

In some cases, a controller 114 can be coupled to the heat source 106 and/or oxygen inlet 107 to control the temperature within the reaction vessel 102. Controller 114 can be coupled to a temperature sensor positioned to read the temperature within the reaction vessel 102.

During thermal treatment, combustion gasses can be expelled from the reaction vessel 102 via a gas outlet 108. In some cases, the gas outlet 108 can be a port in the reaction vessel 102 through which dross is provided into the reaction vessel 102.

A salt source 112 provides salt to the reaction vessel 102, such as in the processing of white dross.

Generally, salt can be recovered from the black dross and salt cake by dissolving the salt in water, removing the insoluble solids in the salt, and then evaporating the water to recover the salt. However, using this process, the salt can contain occluded water (e.g., small pockets of water that were physically/mechanically trapped within the salt crystals during evaporation and drying). When the salt containing occluded water is rapidly heated (e.g., by depositing the salt onto the surface of molten aluminum) the trapped moisture generates pressure that can cause decrepitation (e.g., the salt spits or sizzles). According to the invention, a salt collector 110 is coupled to the gas outlet 108 to receive salt vapor and collect salt from the salt vapor (e.g., through condensation of the salt vapor). The salt collector 110 is coupled to the salt source 112 to replenish the salt source 112 through the extraction of salt from dross within the reaction vessel 102. The salt collected by the salt collector 110 may not contain occluded water and can be rapidly heated without causing decrepitation. Using the salt collector 110 to replenish the salt source 112 allows for faster processing of the salt because additional steps do not need to be taken to prevent decrepitation.

In some cases, an optional sensor 116 (e.g., an optical sensor) can be coupled to the salt collector 110 and/or the gas outlet 108 to detect a concentration of salt in the salt vapor (e.g., through optical inspection of the opacity of the salt vapor). The sensor 116 can be coupled to controller 114 to provide feedback to control the temperature of the reaction vessel 102 in response to changes in the concentration of salt in the salt vapor. For example, once the concentration of salt in the salt vapor drops below a threshold, a determination can be made that at least 95%, 99%, 99.1%, 99.2%, 99.3%, 99.4%, 99.5%, 99.6%, 99.7%, 99.8%, or 99.9% or other relevant amount of the salt has been extracted from the dross within the reaction vessel 102, and the controller 114 can control the heat source 106 and/or oxygen inlet 107 to reduce the temperature within the reaction vessel 102.

While the system 100 can be used with any suitable metals, the system 100 can be advantageously used with dross from aluminum recycling.

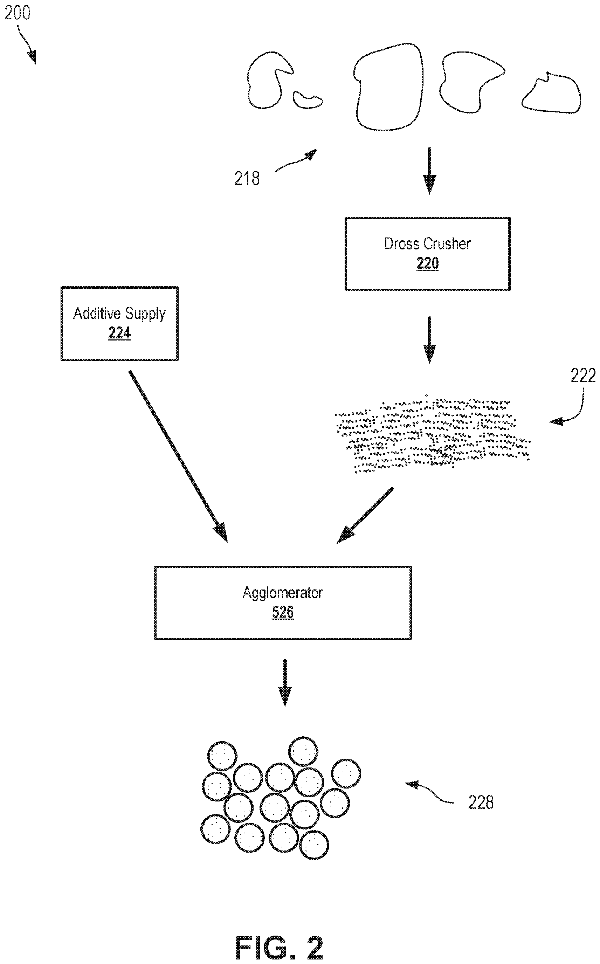

FIG. 2 is a schematic diagram of dross pelletizing system 200 according to certain aspects of the present disclosure. Dross pieces 218 can be spherical or other shaped, and can contain oxides (e.g., aluminum oxides) and other materials, such as metal (e.g., metallic aluminum) and salt. The dross pieces 218 can have inconsistent sizes, such as sizes ranging from 10 mm in diameter to 50 mm in diameter, although pieces of other sizes can be present. The dross pieces 218 can be introduced to a dross crusher 220, which can crush the dross pieces 218 into dross particles 222 (e.g., dross fines). The dross particles 222 can have diameters of at or less than 10 mm, 9 mm, 8 mm, 7 mm, 6 mm, 5 mm, 4 mm, 3 mm, 2 mm, or 1 mm. The dross particles 222 can be mixed with additives from an additive supply 224 and then introduced to an agglomerator 526. The agglomerator 526 can be a pelletizer, or other suitable device for turning the dross particles 222 and additives into dross pellets 228. The dross pellets 228 can have a relatively uniform size on the order of 10 mm to 20 mm in diameter. In some cases, the pelletizer can be an extrusion pelletizer designed to generate extruded pellets having an oblong or elongated shape. As used herein, reference to a diameter of an oblong or elongated shape can refer to a maximum or average diameter of a cross section of an oblong or elongated shape, or to a maximum or average length of an oblong or elongated shape. In some cases, pellets may have a length to diameter ratio of 0.5, 0.6. 0.7, 0.8, 0.9, 1.0, 1.1, 1.2, 1.3, 1.4, 1.5, 1.6, 1.7, 1.8, 1.9, or 2.0.

The proportions of additives and dross particles 222 can be controlled to achieve a desired permeability of the resultant dross pellets 228 upon heating the dross pellets 228 to a channel exposure temperature (e.g., a temperature at which the additive oxidizes and exposes the channels within the dross pellets 228).

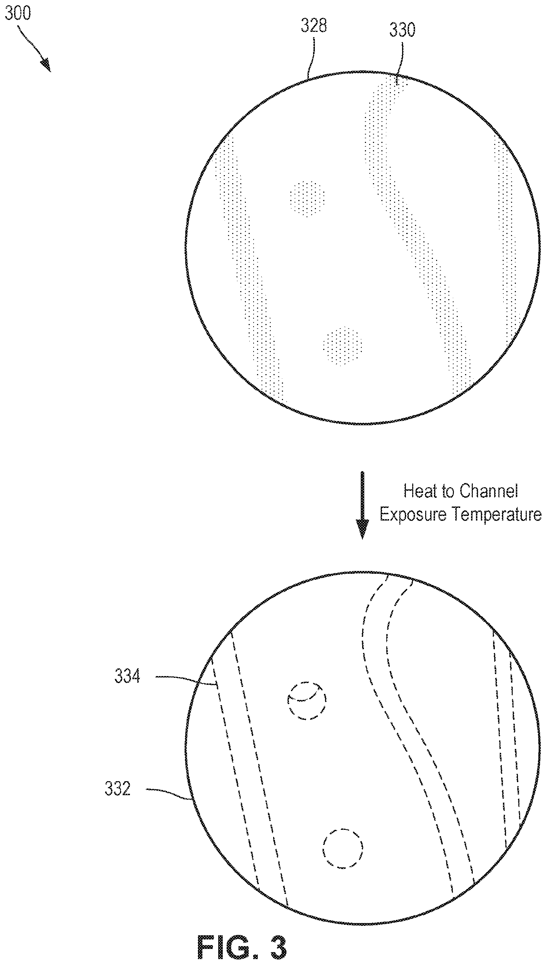

FIG. 3 is a schematic diagram of a dross pellet 328 being heated according to certain aspects of the present disclosure. The dross pellet 328 can be a dross pellet 228 from FIG. 2. The dross pellet 328 can comprise dross imbued with additives. The additives can establish channel precursors 330 within the pellet 328.

After heating the pellet 328 to a channel exposure temperature for a sufficient amount of time, the additives can oxidize, volatize, or otherwise decompose. The resultant channeled pellet 332 can contain channels 334 therethrough. Channels 334 can pass through the channeled pellet 332 in any direction, although in some cases a channel 334 can extend less than through the channeled pellet 332 (e.g., to achieve a single-ended channel 334). In some cases, channels 334 can be surrounded by dross material of the channeled pellet 332 (e.g., forming a void through the channeled pellet 332). In some cases, however, channels 334 can form entirely on the surface of the channeled pellet 332, such as in the shape of surface valleys.

The channels 334 in the channeled pellet 332 can effectively increase the surface-to-volume ratio of the pellet, can permit oxygen to more effectively permeate the pellet, and can permit salt vapor to more effectively escape the pellet.

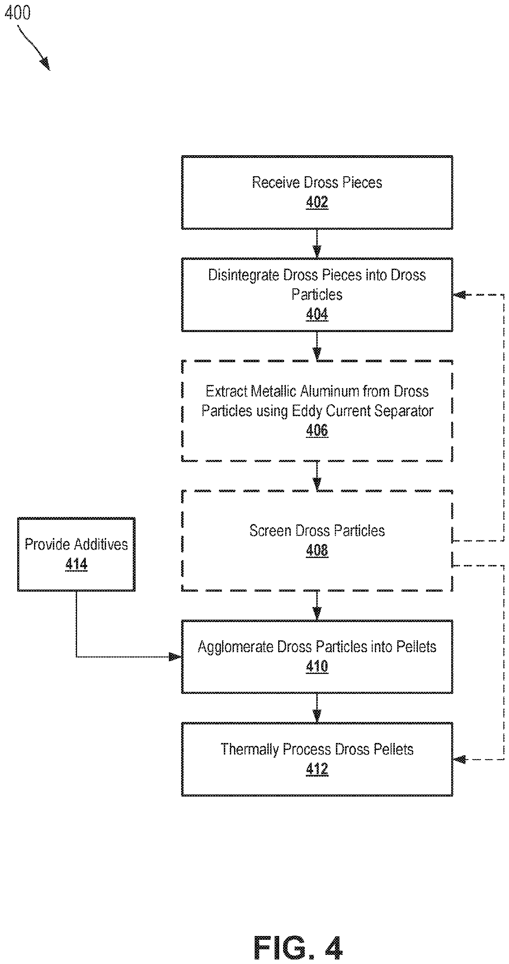

FIG. 4 is a flowchart depicting a process 400 for generating dross pellets according to certain aspects of the present disclosure. Process 400 can be used to generate dross pellets 228 or dross pellets 328 of FIGs. 2 or 3, respectively.

At block 402, dross pieces can be received. At block 404, the dross pieces can be disintegrated. Disintegration can be achieved by crushing, grinding, or otherwise interacting with the dross pieces to reduce the size to dross particles having diameters of at or less than 10 mm, 9 mm, 8 mm, 7 mm, 6 mm, 5 mm, 4 mm, 3 mm, 2 mm, or 1 mm.

At optional block 406, metallic aluminum can be extracted from the dross particles (e.g., disintegrated or crushed dross pieces) using an eddy current separator.

At optional block 408, the dross particles can be screened for size. Screening the dross particles can include separating out oversized particles. In some cases, oversized particles can be directed back to be further disintegrated at block 404. In some cases, oversized particles can be fed forward to be thermally processed at block 412.

At block 410, dross particles can be agglomerated (e.g., reconstituted) into pellets. Agglomerating the dross particles into pellets can occur through pelletization, compaction, or any other suitable technique for generating pellets. In some cases, additives can be provided at block 414 and used during agglomeration at block 410 to generate a pellet comprised of dross particles and additives. The amount and/or type of additives can be controlled to achieve a desired permeability of the resultant pellet.

At block 412, the dross pellet can be thermally processed. Thermal processing a dross pellet can include heating the dross pellet to extract a compound, such as metal or salt. In some cases, the thermal processing at block 412 may solely include pellets agglomerated at block 410. In some cases, the thermal processing at block 412 may additionally or alternatively include oversize particles fed forward from the screening at block 408. For example, at least some of the oversize particles fed forward may be sufficiently large to avoid becoming airborne fines that could contaminate an exhaust stream during thermal processing at block 412 and/or may be sufficiently small to facilitate extraction through thermal processing at block 412 without being subjected to an intervening operation at blocks 410 and/or 412 relating to agglomerating with other dross particles and/or additives.

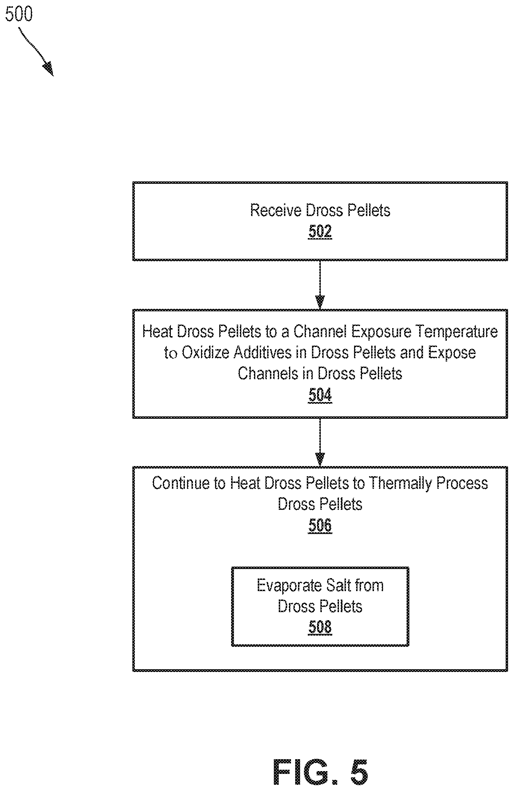

FIG. 5 is a flowchart depicting a process 500 for processing dross pellets according to certain aspects of the present disclosure. At block 502 dross pellets can be received. Dross pellets can contain additives in the shape of channel precursors. At block 504, the dross pellets can be heated to at or above a channel exposure temperature. In some cases, the channel exposure temperature is at or approximately 500 °C. In some cases, the channel exposure temperature is at or below 800 °C, 700 °C, 600 °C, or 500 °C, or at or between 500 °C and 800 °C. Heating the dross pellets at block 504 can cause the additives in the dross pellets to oxidize, volatize, or otherwise decompose, thus exposing the channels within the dross pellet. At block 506, the dross pellets can continue to be heated to thermally process the dross pellets. In some cases, thermally processing the dross pellets at block 506 can comprise evaporating salt from the dross pellets at block 508. In some cases, evaporating salt from the dross pellets at block 508 can comprise passing salt vapors out of the channels of the dross pellets.

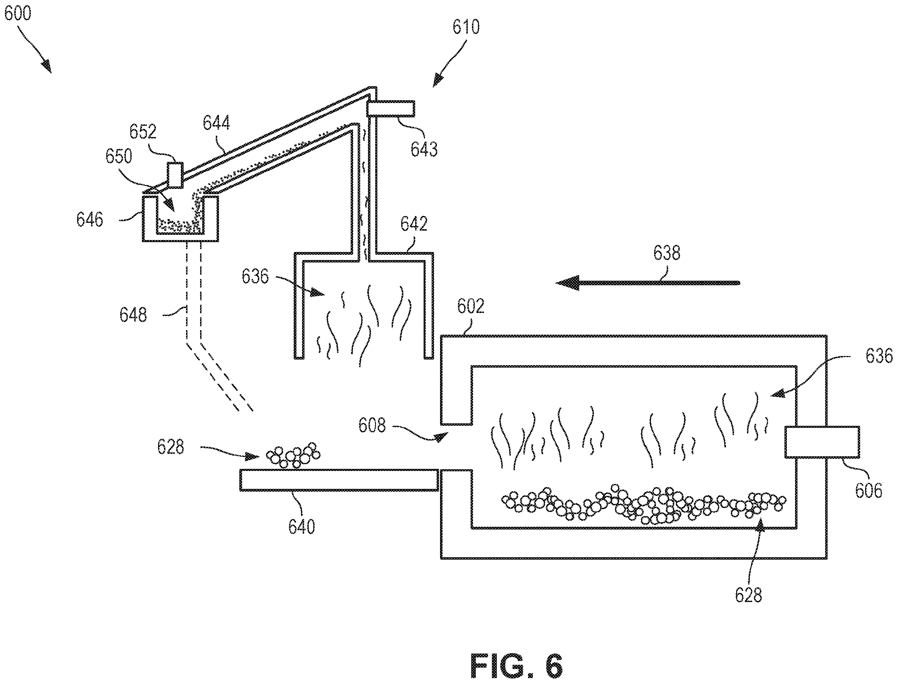

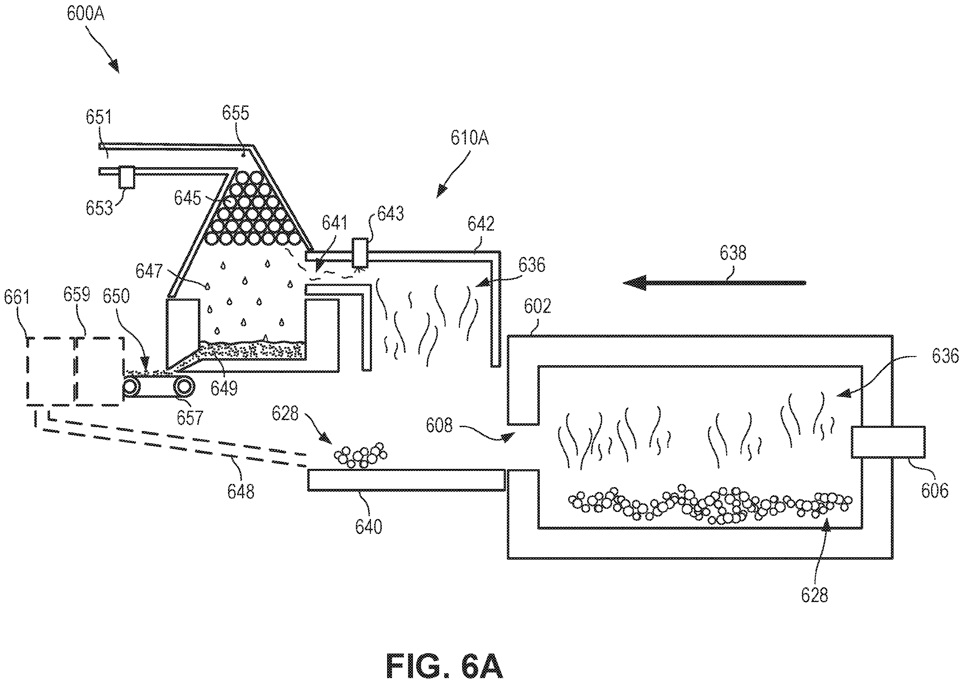

FIG. 6 is a schematic diagram depicting a system 600 for extracting salt 650 from dross 628 according to certain aspects of the present disclosure. The dross 628 can be dross pellets 228 or dross pellets 328 of FIG. 2 or 3, respectively. The system 600 includes a reaction vessel 602. Reaction vessel 602 can be reaction vessel 102 of FIG. 1.

Dross 628 (e.g., black dross or salt cake) can be introduced into the reaction vessel 602 via feed chute 640. A heat supply 606 provides heated gas and oxygen to the reaction vessel 602 during the treatment process. In some cases, the reaction vessel 602 can rotate to tumble the dross 628. After heating to a sufficient temperature (e.g., a temperature approaching the salt boiling point, and in some cases, a temperature at or above the salt boiling point), salt within the dross 628 evaporates as salt vapor 636.

Gasses within the reaction chamber 602 can flow in direction 638, conveying the salt vapor 636 out of the gas outlet 608. The salt vapor 636 is caught in a salt collector 610. The salt collector 610 can include a hood 642 for collecting the salt vapors 636, a condenser 644 for condensing the salt vapor 636 into salt 650, and a salt collection chamber 646 for storing the reclaimed salt 650. In some cases, condensation of the salt vapor may be accomplished or facilitated by ingress into the salt collector 610 of air and/or water (e.g., water spray), such as through an inlet 643 coupled with or included in the condenser 644. An optional supply path 648 redirects reclaimed salt 650 back to the reaction chamber 602 (e.g., via feed chute 640). In some cases, the salt collector 610 can include an extra output 652 for outputting gasses other than the salt fumes 636.

FIG. 6A is a schematic diagram depicting another system 600A for extracting salt 650 from dross according to certain aspects of the present disclosure. The system 600A shown in FIG. 6A can include elements already described with respect to the system 600 shown in FIG. 6. The system 600A shown in FIG. 6A differs from the system 600 shown in FIG. 6 with respect to the salt collector 610A. In the salt collector 610A, the salt vapor 636 collected by the hood 642 may be converted into a liquid salt mist 641 by mixing with water and/or air introduced through a water and/or air inlet 643. A bed of demister media 645 may be positioned in the path of the liquid salt mist 641 and may induce condensation or otherwise cause the liquid salt mist 641 to coalesce into droplets 647 that can fall and be collected as a liquid salt bath within a reservoir 649. One suitable option for the demister media 645 may be tabular alumina spheres, although other types of media may be utilized. The demister media 645 may remove salt from the exhaust stream that may be directed out an exhaust 651 of the salt collector 610A. In some cases, a dilution inlet 653 can introduce additional air into the exhaust stream for further dilution of particulate, e.g., before the exhaust stream is directed further through a fan and/or baghouse.

In some cases, temperature may be monitored and/or regulated to facilitate conditions for causing droplets 647 to coalesce. A temperature at a reference point 655 downstream of the demister media 645 may be measured by a suitable temperature sensor and provide input for adjusting an amount of water and/or air introduced through the water and/or air inlet 643. For example, an increase in introduced air and/or water may be triggered to decrease a downstream temperature or a decrease in introduced air and/or water may be triggered to increase a downstream temperature. As an illustrative example, water and/or air introduced through the water and/or air inlet 643 may be modulated to target a downstream temperature of 800 °C at reference point 655 and/or an input temperature of 850 °C adjacent the water and/or air inlet 643.

Various elements may be included to process reclaimed salt 650 from the liquid salt bath contained in the reservoir 649. For example, the reclaimed salt 650 from the salt bath may be carried by a salt caster 657. In some cases, reclaimed salt 650 may be introduced into a cooler 659 and/or into a crusher 661. An optional supply path 648 redirects reclaimed salt 650 (e.g., in a liquid or solid state) back to the reaction chamber 602 (e.g., via feed chute 640).

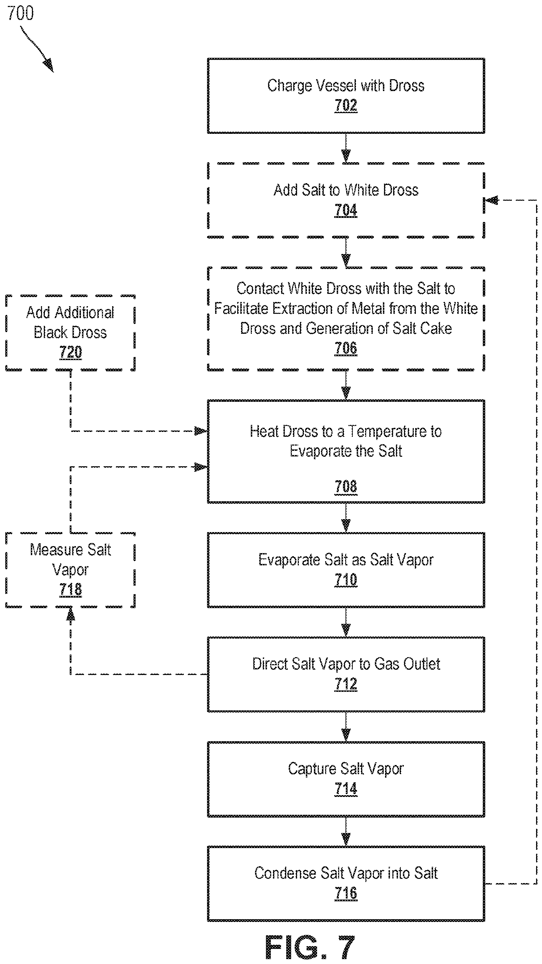

FIG. 7 is a flowchart depicting a process 700 for extracting salt from dross according to certain aspects of the present disclosure. Process 700 can occur using the system 600 of FIG. 6. Process 700 can occur using the dross pellets 228, 328 of FIGs. 2, 3, respectively.

At block 702, a reaction vessel is charged with dross (e.g., dross pellets). In some cases, charging the vessel with dross can comprise inputting dross into the reaction vessel. In some cases, charging the vessel with dross can comprise generating dross within the reaction vessel through the melting of scrap metal.

In some cases, the dross can include white dross and additional actions can be performed to generate salt cake and extract metal from the white dross. At optional block 704, salt can be added to the white dross. At optional block 706, the white dross can be contacted with the salt at a first temperature. This contacting and heating can facilitate extraction of metal from the white dross and can facilitate generation of salt cake.

At block 708, the dross (e.g., black dross or salt cake) can be heated to a temperature that is sufficiently high to evaporate the salt (i.e., at 1200 °C or greater). In some cases, the dross can be heated to a temperature that is approaching, at or greater than a boiling point of the salt within the dross. Heating the dross can comprises supplying heat from a heat source (e.g., oxy-fuel burner) or supplying oxygen to facilitate oxidation of fuel within the reaction vessel (e.g., residual carbon). At block 710, the salt can be permitted to evaporate as salt vapor. In some cases, blocks 708 and/or 710 can occur for a duration sufficient to evaporate a desired amount of salt (e.g., 95%, 99%, or 99.9%) from the dross. At block 712, the salt vapor can be directed to a gas outlet. At block 714, the salt vapor is captured. At block 716, the salt vapor is condensed into salt (e.g., into solid salt or liquid salt). In some cases, the salt reclaimed at block 716 is reused in a subsequent block 704 to supply salt to subsequent white dross. In some cases, the salt reclaimed at block 716 may be reused in a use other than generating subsequent salt cake. For example, in some cases, the salt reclaimed at block 716 can be used to facilitate melting of scrap metal.

In some cases, the salt vapor can be measured at optional block 718 to obtain a measurement of salt concentration in the salt vapor. Based on the measurement at block 718, a determination can be made to cease heating the dross and evaporating the salt at blocks 708, 710. In some cases, this determination can be associated with evaporation of a desired amount of salt as determined by the measurement at block 718.

In some cases, additional black dross can be added to the reaction vessel at optional block 720. Additional black dross can permit higher quantities of salt to be evaporated and reclaimed at blocks 710, 712, 714, 716. In some cases, the addition of black dross at block 720 can improve the efficiency of thermally treating subsequent white dross.

Results from one example set of testing are shown in the chart below. In these test runs, the dross samples used had an initial salt level of approximately 50% and were subjected to the temperatures and timing indicated to obtain the measured percentages of salt removed and residual chloride. These results indicated that by operating at elevated temperatures (e.g., at or above boiling points of salt, or even below but near such points), residual chloride salts can be reduced by more than 99% and that the resulting calcined oxide residue can be non-reactive and considered non-hazardous for transport, use, and disposal under the Toxicity Characteristic Leach Procedure (TCLP) standards set by the Environmental Protection Agency (EPA).

| Run # | Starting Temperature (°C) | Maximum Temperature (°C) | Total Time (min) | Salt Removal (%) | Residual Chloride (%) |
|---|---|---|---|---|---|
| 1 | 1350 | 1530 | 90 | 99.5 | 0.10 |
| 2 | 1350 | 1520 | 90 | 99.7 | 0.06 |
| 3 | 1300 | 1565 | 100 | 99.8 | 0.04 |
| 4 | 1300 | 1510 | 90 | 99.9 | 0.03 |
| 5 | 1300 | 1500 | 90 | 97.6 | 0.49 |
| 6 | 1300 | 1440 | 135 | 98.3 | 0.34 |
| 7 | 1450 | 1550 | 90 | 99.6 | 0.08 |
| 8 | 1350 | 1450 | 90 | 99.7 | 0.07 |
| 9 | 1350 | 1600 | 90 | 99.9 | 0.03 |
| 10 | 1350 | 1460 | 90 | 99.8 | 0.04 |

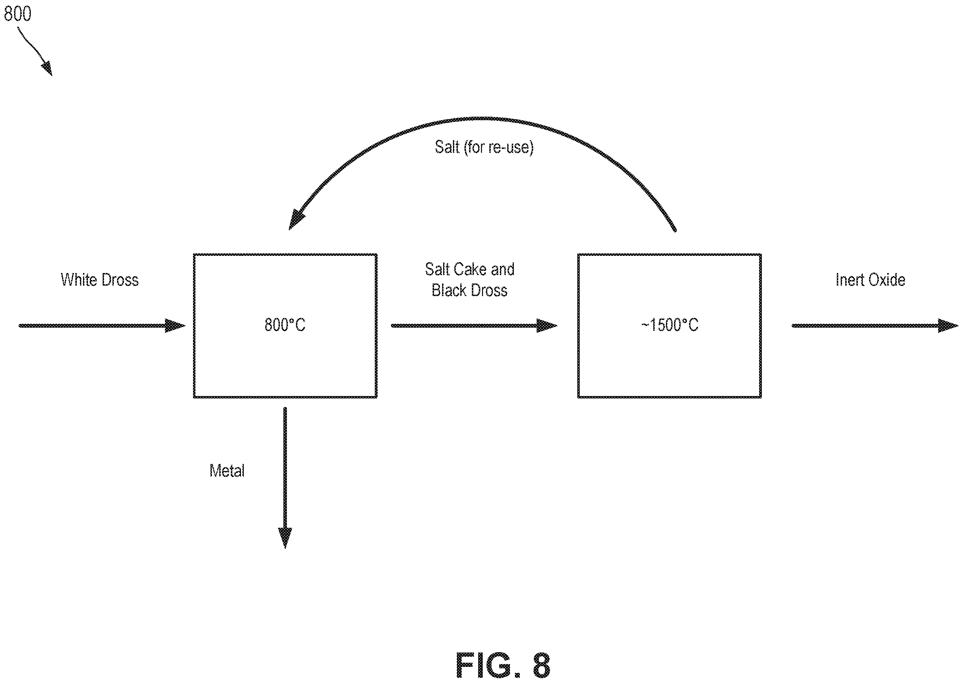

FIG. 8 is a schematic diagram depicting two-stage process 800 for thermally treating dross according to certain aspects of the present disclosure. In a first stage, white dross can be heated within a reaction vessel, in combination with salt, to a first temperature (e.g., at or approximately 800 °C) to extract metal and generate salt cake. In a second stage, salt cake and optional black dross can be heated in a reaction vessel (e.g., the same reaction vessel or a different reaction vessel) to a second temperature that is sufficiently high to extract the salt as salt vapor and result in inert oxides. In some cases, the second temperature is at or exceeds the boiling point of the salt (e.g., at or approximately 1500 °C). The extracted salt can be reused in the first stage for a subsequent treatment.

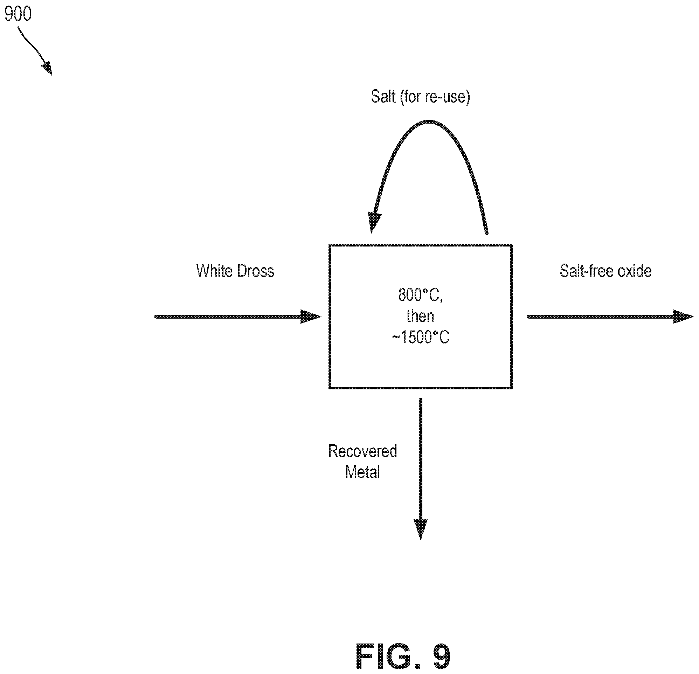

FIG. 9 is a schematic diagram depicting a single-vessel, two-stage process 900 for thermally treating dross according to certain aspects of the present disclosure. Process 900 can be the same as process 800, however specifically performed in a single vessel. In a first stage, white dross can be heated within a reaction vessel, in combination with salt, to a first temperature (e.g., at or approximately 800 °C) to extract metal and generate salt cake. In a second stage, the salt cake within the reaction vessel can be further heated to a second temperature that is sufficiently high to extract salt as salt vapor and output salt-free oxides (e.g., 1200 °C or greater). In some cases, the second temperature is at or exceeds the boiling point of the salt (e.g., at or approximately 1500 °C). In some cases, black dross can be optionally added to the reaction vessel between the first and second stages. The salt extracted in the second stage can be reused in the first stage of a subsequent treatment.

The foregoing description of the embodiments, including illustrated embodiments, has been presented only for the purpose of illustration and description and is not intended to be exhaustive or limiting to the precise forms disclosed. Numerous modifications, adaptations, and uses thereof will be apparent to those skilled in the art.

## Claims

1. A system for extracting salt from metal recycling byproducts, comprising:
a reaction vessel (102) for receiving dross comprising aluminum oxides and salt, wherein the reaction vessel (102) contains an oxygen inlet (107) for establishing an oxidizing environment;
a heat source (106) coupled to the reaction vessel (102) for heating the dross to a temperature at or above 1200°C to evaporate the salt as salt vapor;
a gas outlet (108) coupled to the reaction vessel (102) for conveying gas and salt vapor from the reaction vessel (102); and
a salt collector (110) coupled to the gas outlet (108) for collecting and condensing the salt vapor, **characterized in that**
the salt collector (110) is coupled to a salt source (112) to replenish the salt source (112) through the extraction of salt from the dross within the reaction vessel (102), and wherein the salt source (112) provides salt to the reaction vessel (102).

2. The system of claim 1, wherein the salt comprises NaCl and wherein the heat source (106) is suitable for heating the dross to temperatures at or above 1450 °C, and/or wherein the salt comprises KCl and wherein the heat source (106) is suitable for heating the dross to temperatures at or above 1416 °C.

3. The system of claim 1, wherein the dross is maintained at a temperature in the range of 1200°C to 1600°C, in particular wherein the dross is maintained at said temperature until at least 95% of the salt in the dross has evaporated.

4. The system of any of claims 1 through 3, wherein the dross comprises compounds selected from the group consisting of nitrides, carbides, sulfides, and phosphides.

5. The system of any of claims 1 through 4, wherein the dross comprises residual carbon; and wherein the oxidizing environment is suitable for oxidizing the residual carbon to facilitate heating the dross to the temperature; and/or
wherein the dross comprises residual metallic aluminum; and wherein the oxidizing environment is suitable for oxidizing the residual metallic aluminum to facilitate heating the dross to the temperature.

6. The system of any of claims 1 through 5, further comprising a sensor (116) for detecting a concentration of salt vapor exiting the gas outlet (108); and/or
wherein the sensor (116) comprises an optical sensor for detecting an opacity of the salt vapor exiting the gas outlet (108); and/or
wherein the heat source (102) comprises an oxy-fuel burner.

7. A method of extracting salt from metal recycling byproduct using the system of claim 1, comprising:
charging the reaction vessel (102) with dross comprising aluminum oxides and salt;
heating the dross to a temperature at or above 1200°C to evaporate the salt;
maintaining the dross at the temperature to permit evaporation of the salt as salt vapor, wherein maintaining the dross at the temperature further comprises maintaining the dross at the temperature in an oxidizing environment;
directing the salt vapor out of the reaction vessel (102) through the gas outlet (108);
collecting and condensing the salt vapor into a salt; and
collecting and reusing the salt for further treatment of dross.

8. The method of claim 7, wherein the salt vapor is condensed into solid or liquid salt.

9. The method of claims 7 or 8, wherein the salt comprises NaCl and the temperature is at or above 1450 °C, and/or wherein the salt comprises KCl and the temperature is at or above 1416 °C.

10. The method of claims claim 7 or 8 comprising maintaining the dross at a temperature in the range of 1200°C to 1600°C.

11. The method of any of claims claim 7 through 10, wherein the dross comprises compounds selected from the group consisting of nitrides, carbides, sulfides, and phosphides.

12. The method of any of claims 7 through 11, wherein the dross comprises residual carbon, and wherein heating the dross to the temperature comprises oxidizing the residual carbon; and/or
wherein the dross comprises residual metallic aluminum, and wherein heating the dross to the temperature comprises oxidizing the residual metallic aluminum.

13. The method of any of claims 7 through 12, wherein maintaining the dross at the temperature comprises maintaining the dross at the temperature until at least 95% of the salt has evaporated.

14. The method of any of claims 7 through 13, further comprising:
removing treated dross from the reaction vessel (102), wherein the reaction vessel (102) contains residual heat after removing the treated dross; and
charging the reaction vessel (102) with additional dross and treating the additional dross, wherein treating the additional dross comprises using the residual heat in the reaction vessel (102).

15. The method of any of claims 7 through 14, wherein maintaining the dross at the temperature to permit evaporation of the salt further comprises detecting a concentration of the salt vapor exiting the gas outlet (108) and determining to stop maintaining the dross at the temperature based on the detected concentration of the salt vapor; and in particular
wherein detecting the concentration of the salt vapor comprises detecting an opacity of the salt vapor existing the gas outlet (108).

## Patentansprüche

1. System zum Extrahieren von Salz aus Metallrecycling-Nebenprodukten, umfassend:
ein Reaktionsgefäß (102) zum Aufnehmen von Krätze, umfassend Aluminiumoxide und Salz, wobei das Reaktionsgefäß (102) einen Sauerstoffeinlass (107) zum Herstellen einer oxidierenden Umgebung enthält;
eine Wärmequelle (106), die mit dem Reaktionsgefäß (102) gekoppelt ist, zum Erhitzen der Krätze auf eine Temperatur von oder über 1200 °C, um das Salz als Salzdampf zu verdampfen;
einen Gasauslass (108), der mit dem Reaktionsgefäß (102) gekoppelt ist, zum Leiten von Gas und Salzdampf aus dem Reaktionsgefäß (102); und
einen Salzsammler (110), der mit dem Gasauslass (108) gekoppelt ist, zum Sammeln und Kondensieren des Salzdampfes, **dadurch gekennzeichnet, dass**
der Salzsammler (110) mit einer Salzquelle (112) gekoppelt ist, um die Salzquelle (112) durch die Extraktion von Salz aus der Krätze innerhalb des Reaktionsgefäßes (102) wieder aufzufüllen, und wobei die Salzquelle (112) Salz an das Reaktionsgefäß (102) liefert.

2. System nach Anspruch 1, wobei das Salz NaCl umfasst und wobei die Wärmequelle (106) zum Erhitzen der Krätze auf Temperaturen von oder über 1450 °C geeignet ist, und/oder wobei das Salz KCl umfasst und wobei die Wärmequelle (106) zum Erhitzen der Krätze auf Temperaturen von oder über 1416 °C geeignet ist.

3. System nach Anspruch 1, wobei die Krätze bei einer Temperatur im Bereich von 1200 °C bis 1600 °C gehalten ist, insbesondere wobei die Krätze bei dieser Temperatur gehalten ist, bis mindestens 95% von dem Salzes in der Krätze verdampft sind.

4. System nach einem der Ansprüche 1 bis 3, wobei die Krätze Verbindungen umfasst, die aus der Gruppe bestehend aus Nitriden, Carbiden, Sulfiden und Phosphiden ausgewählt sind.

5. System nach einem der Ansprüche 1 bis 4, wobei die Krätze Restkohlenstoff umfasst; und wobei die oxidierende Umgebung geeignet ist, den Restkohlenstoff zu oxidieren, um das Erhitzen der Krätze auf die Temperatur zu erleichtern; und/oder
wobei die Krätze metallisches Restaluminium umfasst; und wobei die oxidierende Umgebung geeignet ist, das metallische Restaluminium zu oxidieren, um das Erhitzen der Krätze auf die Temperatur zu erleichtern.

6. System nach einem der Ansprüche 1 bis 5, ferner umfassend einen Sensor (116) zum Detektieren einer Konzentration von aus dem Gasauslass (108) austretendem Salzdampf; und/oder
wobei der Sensor (116) einen optischen Sensor zum Detektieren einer Trübung des aus dem Gasauslass (108) austretenden Salzdampfes umfasst; und/oder
wobei die Wärmequelle (102) einen Sauerstoff-Brennstoff-Brenner umfasst.

7. Verfahren zum Extrahieren von Salz aus einem Metallrecycling-Nebenprodukt unter Verwendung des Systems nach Anspruch 1, umfassend:
Beschicken des Reaktionsgefäßes (102) mit Krätze, umfassend Aluminiumoxide und Salz;
Erhitzen der Krätze auf eine Temperatur von oder über 1200 °C, um das Salz zu verdampfen;
Halten der Krätze bei der Temperatur, um ein Verdampfen des Salzes als Salzdampf zu ermöglichen,
wobei das Halten der Krätze bei der Temperatur ferner das Halten der Krätze bei der Temperatur in einer oxidierenden Umgebung umfasst;
Leiten des Salzdampfes aus dem Reaktionsgefäß (102) durch den Gasauslass (108);
Sammeln und Kondensieren des Salzdampfes zu einem Salz; und
Sammeln und Wiederverwenden des Salzes für eine weitere Behandlung von Krätze.

8. Verfahren nach Anspruch 7, wobei der Salzdampf zu festem oder flüssigem Salz kondensiert wird.

9. Verfahren nach Anspruch 7 oder 8, wobei das Salz NaCl umfasst und die Temperatur bei oder über 1450 °C liegt, und/oder wobei das Salz KCl umfasst und die Temperatur bei oder über 1416 °C liegt.

10. Verfahren nach Anspruch 7 oder 8, umfassend ein Halten der Krätze bei einer Temperatur im Bereich von 1200 °C bis 1600 °C.

11. Verfahren nach einem der Ansprüche 7 bis 10, wobei die Krätze Verbindungen umfasst, die aus der Gruppe bestehend aus Nitriden, Carbiden, Sulfiden und Phosphiden ausgewählt sind.

12. Verfahren nach einem der Ansprüche 7 bis 11, wobei die Krätze Restkohlenstoff umfasst, und wobei das Erhitzen der Krätze auf die Temperatur ein Oxidieren des Restkohlenstoffs umfasst; und/oder
wobei die Krätze metallisches Restaluminium umfasst, und wobei das Erhitzen der Krätze auf die Temperatur ein Oxidieren des metallischen Restaluminiums umfasst.

13. Verfahren nach einem der Ansprüche 7 bis 12, wobei das Halten der Krätze bei der Temperatur ein Halten der Krätze bei der Temperatur umfasst, bis mindestens 95% von dem Salz verdampft sind.

14. Verfahren nach einem der Ansprüche 7 bis 13, ferner umfassend:
Entfernen der behandelten Krätze aus dem Reaktionsgefäß (102), wobei das Reaktionsgefäß (102) nach Entfernen der behandelten Krätze Restwärme enthält; und
Beschicken des Reaktionsgefäßes (102) mit zusätzlicher Krätze und Behandeln der zusätzlichen Krätze, wobei das Behandeln der zusätzlichen Krätze ein Nutzen der Restwärme im Reaktionsgefäß (102) umfasst.

15. Verfahren nach einem der Ansprüche 7 bis 14, wobei das Halten der Krätze bei der Temperatur, um ein Verdampfen des Salzes zu ermöglichen, ferner ein Detektieren einer Konzentration des aus dem Gasauslass (108) austretenden Salzdampfes und ein Bestimmen, um ein Halten der Krätze bei der Temperatur, basierend auf der detektierten Konzentration des Salzdampfes zu beenden, umfasst; und insbesondere
wobei das Detektieren der Konzentration des Salzdampfes ein Detektieren einer Trübung des aus dem Gasauslass (108) austretenden Salzdampfes umfasst.

## Revendications

1. Système d'extraction de sel à partir de sous-produits de recyclage de métaux, comprenant :
une cuve de réaction (102) destinée à recevoir des crasses comprenant des oxydes d'aluminium et du sel, dans lequel la cuve de réaction (102) contient un orifice d'entrée d'oxygène (107) destiné à établir un environnement d'oxydation ;
une source de chaleur (106) raccordée à la cuve de réaction (102) destinée à chauffer les crasses à une température supérieure ou égale à 1200 °C pour évaporer le sel sous forme de vapeur de sel ;
un orifice de sortie de gaz (108) raccordé à la cuve de réaction (102) destiné à transporter du gaz et de la vapeur de sel à partir de la cuve de réaction (102) ; et
un collecteur de sel (110) raccordé à l'orifice de sortie de gaz (108) à des fins de collecte et de condensation de la vapeur de sel, **caractérisé en ce que**
le collecteur de sel (110) est raccordé à une source de sel (112) pour réapprovisionner la source de sel (112) par l'intermédiaire de l'extraction de sel des crasses à l'intérieur de la cuve de réaction (102), et
dans lequel la source de sel (112) fournit du sel à la cuve de réaction (102).

2. Système selon la revendication 1, dans lequel le sel comprend du NaCl et dans lequel la source de chaleur (106) est appropriée pour chauffer les crasses à des températures supérieures ou égales à 1450 °C, et/ou dans lequel le sel comprend du KCl et dans lequel la source de chaleur (106) est appropriée pour chauffer les crasses à des températures supérieures ou égales à 1416 °C.

3. Système selon la revendication 1, dans lequel les crasses sont maintenues à une température s'inscrivant dans la plage de 1200 °C à 1600 °C, en particulier dans lequel les crasses sont maintenues à ladite température jusqu'à l'évaporation d'au moins 95 % du sel des crasses.

4. Système selon l'une quelconque des revendications 1 à 3, dans lequel les crasses comprennent des composés sélectionnés dans le groupe constitué de nitrures, de carbures, de sulfures et de phosphures.

5. Système selon l'une quelconque des revendications 1 à 4, dans lequel les crasses comprennent du charbon résiduel ; et dans lequel l'environnement d'oxydation est approprié pour oxyder le charbon résiduel pour faciliter une chauffe des crasses à la température ; et/ou
dans lequel les crasses comprennent de l'aluminium métallique résiduel ; et dans lequel l'environnement d'oxydation est approprié pour oxyder l'aluminium métallique résiduel pour faciliter une chauffe des crasses à la température.

6. Système selon l'une quelconque des revendications 1 à 5, comprenant en outre un capteur (116) destiné à détecter une concentration de vapeur de sel s'échappant de l'orifice de sortie de gaz (108) ; et/ou
dans lequel le capteur (116) comprend un capteur optique destiné à détecter une opacité de la vapeur de sel s'échappant de l'orifice de sortie de gaz (108) ; et/ou
dans lequel la source de chaleur (102) comprend un brûleur oxy-combustible.

7. Procédé d'extraction de sel d'un sous-produit de recyclage de métaux au moyen du système selon la revendication 1, comprenant les étapes consistant à :
charger la cuve de réaction (102) avec des crasses comprenant des oxydes d'aluminium et du sel ;
chauffer les crasses à une température supérieure ou égale à 1200 °C pour évaporer le sel ;
maintenir les crasses à la température pour permettre une évaporation du sel sous forme de vapeur de sel, dans lequel le fait de maintenir les crasses à la température consiste en outre à maintenir les crasses à la température dans un environnement d'oxydation ;
diriger la vapeur de sel hors de la cuve de réaction (102) par l'intermédiaire de l'orifice de sortie de gaz (108) ;
collecter et condenser la vapeur de sel en un sel ; et
collecter et réutiliser le sel à des fins de traitement supplémentaire de crasses.

8. Procédé selon la revendication 7, dans lequel la vapeur de sel est condensée en un sel solide ou liquide.

9. Procédé selon les revendications 7 ou 8, dans lequel le sel comprend du NaCl et la température est supérieure ou égale à 1450 °C, et/ou dans lequel le sel comprend du KCl et la température est supérieure ou égale à 1416 °C.

10. Procédé selon les revendications 7 ou 8, comprenant l'étape consistant à maintenir les crasses à une température s'inscrivant dans la plage de 1200 °C à 1600 °C.

11. Procédé selon l'une quelconque des revendications 7 à 10, dans lequel les crasses comprennent des composés sélectionnés dans le groupe constitué de nitrures, de carbures, de sulfures et de phosphures.

12. Procédé selon l'une quelconque des revendications 7 à 11, dans lequel les crasses comprennent du charbon résiduel, et dans lequel l'étape de chauffe des crasses à la température consiste à oxyder le charbon résiduel ; et/ou
dans lequel les crasses comprennent de l'aluminium métallique résiduel, et dans lequel l'étape de chauffe des crasses à la température consiste à oxyder l'aluminium métallique résiduel.

13. Procédé selon l'une quelconque des revendications 7 à 12, dans lequel l'étape de maintien des crasses à la température consiste à maintenir les crasses à la température jusqu'à l'évaporation d'au moins 95 % du sel.

14. Procédé selon l'une quelconque des revendications 7 à 13, comprenant en outre les étapes consistant à :
retirer les crasses traitées de la cuve de réaction (102), dans lequel la cuve de réaction (102) contient de la chaleur résiduelle après le retrait des crasses traitées ; et
charger la cuve de réaction (102) avec des crasses supplémentaires et traiter les crasses supplémentaires, dans lequel l'étape de traitement des crasses supplémentaires consiste à utiliser la chaleur résiduelle dans la cuve de réaction (102).

15. Procédé selon l'une quelconque des revendications 7 à 14, dans lequel l'étape de maintien des crasses à la température pour permettre une évaporation du sel consiste en outre à détecter une concentration de la vapeur de sel s'échappant de l'orifice de sortie de gaz (108) et à déterminer d'interrompre le maintien des crasses à la température sur la base de la concentration détectée de la vapeur de sel ; et en particulier dans lequel l'étape de détection de la concentration de la vapeur de sel consiste à détecter une opacité de la vapeur de sel s'échappant de l'orifice de sortie de gaz (108).
